# EUROPEAN PATENT APPLICATION

(11) **EP 1 400 833 A1**
(43) Date of publication of application: **24.03.2004**
(21) Application number: 03020582.7
(22) Date of filing: 18.09.2003
(51) Int. Cl.: G02C 7/02

(54) **Progressive multifocal lens and method of designing the same**

(30) Priority: 20.09.2002 JP 2002275179
(71) Applicant: SEIKO EPSON CORPORATION, Shinjuku-ku, Tokyo 163-0811 (JP)
(72) Inventor:
(74) Representative: Hoffmann, Eckart, Dipl.-Ing.

(57) **Abstract**

A novel combining formula for combining a progressive refractive surface and a toric surface is disclosed to provide a novel progressive multifocal lens which has an eyesight correcting capability and an astigmia remedying capability on the same refractive surface.

## Description

The present invention relates to a progressive multifocal lens having an eyesight correcting capability and an astigmia remedying capability, and a method of designing it.

A progressive multifocal lens is a lens having two visual field portions of different refractive powers, and a third visual field portion whose refractive power changes progressively between those two visual field portions. It, thus, provides two visual fields of different refractive powers with a single lens having no boundaries between these visual field portions and is excellent in external appearance. Therefore, it is often employed as a spectacle lens which has the function of correcting the eyesights of presbyopia etc.

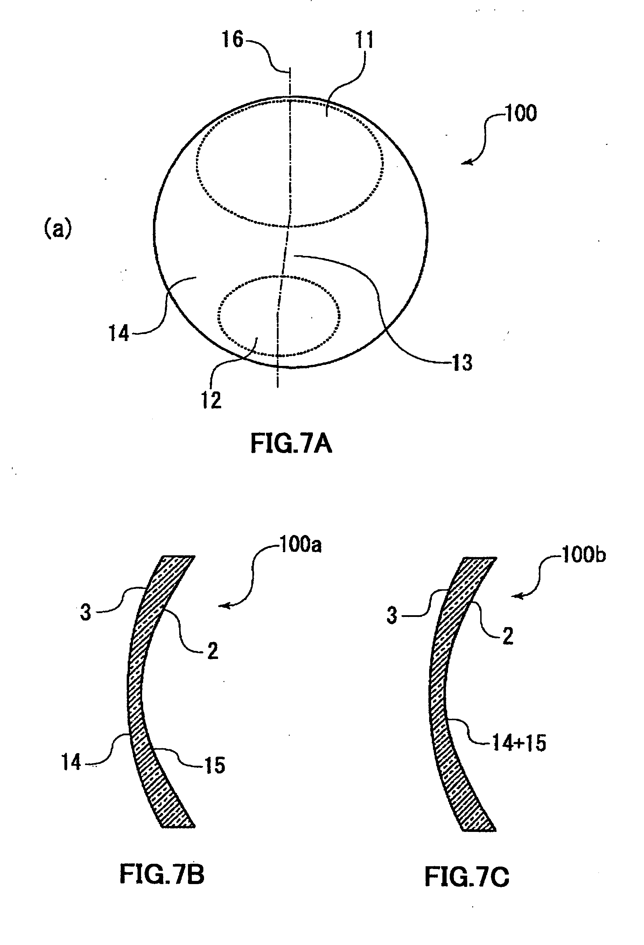

Shown in Fig. 7(a) is the general structure of a conventional progressive multifocal lens which is often employed as a spectacle lens. The progressive multifocal lens 100 has a far-use portion 11, which is a visual field portion for seeing a thing at greater distances and is located in the upper portion of the lens, and a visual field portion, which has a refractive power different from that of the far-use portion 11 and which serves to see a thing at smaller distances and which is located as a near-use portion 12 in the lower lens portion under the far-use portion 11. The far-use portion 11 and the near-use portion 12 are connected by a progressive portion 13 being a visual field portion which has a refractive power that changes continuously from that in the far-use portion to that in the near-use portion to allow seeing a thing at distances intermediate between the greater distances of the far-use portion and the smaller distances of the near-use portion.

In the single-plate lens for use in spectacles, as shown in Fig. 7(b), the two refractive surfaces, a refractive surface 2 facing the eyeball and a refractive surface 3 facing the object, need to afford all performances required of the spectacle lens, for example, a vertex refractive power conforming to the diopters of a user, a cylindrical refractive power for remedying astigmia, an additional refractive power for compensating presbyopia, and a prismatic refractive power for remedying heterophoria. In the conventional progressive multifocal lens 100a, therefore, as shown in Fig. 7(b), a progressive refractive surface 14 which gives a refractive power changing continuously, in order to construct the far-use portion 11, near-use portion 12 and progressive portion 13 is formed on the refractive surface 3 on the object side, and the refractive surface 2 on the eyeball side is used as an astigmia-remedying toric surface 15, etc.

In contrast to the progressive multifocal lens 100a of such a conventional structure, WO 97/19382 discloses a so-called "inner-surface progressive multifocal lens" 100b wherein a progressive refractive surface is formed on the refractive surface 2 on the eyeball side by taking note of the arrangement of the progressive refractive surface which gives the magnifying power of the progressive multifocal lens, with the object of providing a progressive multifocal lens featuring less shaking and distortion of the image attributed to fluctuations in the magnifying powers of the far-use portion 11 and near-use portion 12 of the progressive multifocal lens.

The inner-surface progressive multifocal lens 100b of WO 97/19382 (EP-A-0 809 126) can reduce the difference between magnifying powers in a far-use portion and a near-use portion, and can sharply relieve the shaking and distortion of an image attributed to this difference.

In such an inner-surface progressive multifocal lens 100b, the progressive refractive surface 14 is located on the eyeball-side refractive surface 2, so that it can be combined with an astigmia-remedying toric surface 15 on the eyeball-side refractive surface 2. The progressive multifocal lens 100b, in which the eyeball-side refractive surface 2 has an eyesight correcting property and an astigmia remedying property, allows reducing the difference of the magnifying powers of the far-use portion and near-use portion to the required minimum, has, thus, little distortion and shaking of the image, is capable of remedying astigmia, and can offer more pleasant visual fields even to an astigmic user.

The progressive multifocal lens 100b which is endowed with the eyesight correcting property and the astigmia remedying property on the eyeball-side refractive surface 2, can be designed by a designing method which includes a first step of calculating a progressive refractive surface (hereinafter, "original progressive refractive surface") for the only purpose of causing an eyeball-side refractive surface to demonstrate a desired eyesight-correcting characteristic, a second step of calculating a toric surface (hereinafter, "original toric surface") for the only purpose of causing the eyeball-side refractive surface to demonstrate a desired astigmia-remedying characteristic, and a third step of calculating the eyeball-side refractive surface of the progressive multifocal lens from the original progressive refractive surface and the original toric surface.

In the above document WO 97/19382, a combining formula for integrating the original progressive refractive surface and the original toric surface at the third step is proposed. In the progressive multifocal lens 100b in which the progressive refractive surface 14 and the toric surface 15 are combined on the eyeball-side refractive surface 2 by using the combining formula disclosed in the document WO 97/19382, it is recognized that, as in the conventional progressive multifocal lens 100a, an eyesight correcting capability intended to remedy astigmia is not hampered over substantially the whole region of a principal fixation line 16, and that astigmatism can be held very stably.

The "toric surface" is defined as a surface whose radii of curvature in sections orthogonal to each other are different so that the maximum refractive power occurs within a certain meridian plane and the minimum refractive power within a meridian plane rectangular to that certain meridian plane. However, the respective sectional shapes of the meridian planes affording the maximum refractive power and the meridian plane affording the minimum refractive power are circular arcs, and the shape of the curved plane between both the meridian planes is not especially determined. That is, it can be said that there is an infinite number of sorts of the planar shape (the curved plane) of the toric surface. The combining formula disclosed in the document WO 97/19382 has the advantage that the computation is comparatively easy, but it merely combines the original surfaces by regarding the shape of the toric surface as being constant in the radius of curvature in an x-axial direction and the radius of curvature in a y-axial direction, respectively.

Accordingly, in the combined refractive surface of the progressive refractive surface and toric surface a more excellent astigmia correction capability may possibly be provided by using another combining formula, which represents the planar shape of the toric surface.

The present invention has been made in view of the above circumstances, and has for its object to improve the progressive multifocal lens which combines an eyesight correcting capability and an astigmia remedying capability on the same refractive surface. Also, the present invention has for its object to provide a method of designing such a progressive multifocal lens.

These objects are achieved by a lens as claimed in claim 1 and a method as claimed in claim 3. A preferred embodiment of the invention is subject-matter of claim 2.

The progressive multifocal lens of the present invention adopts a toric surface represented by a toroidal surface or torus, and includes a combined refractive surface obtained using a novel combining formula (1) or (2) for combining the toric surface and a progressive refractive surface, on one refractive surface either that on the side of the eyeball or that on the side of the object.

Such a progressive multifocal lens can be designed by a method which includes a first step of calculating the progressive refractive surface (hereinafter, "original progressive refractive surface") for the only purpose of causing it to demonstrate a desired eyesight-correcting characteristic, a second step of calculating the toric surface (hereinafter, "original toric surface") for the only purpose of causing it to demonstrate a desired astigmia-remedying characteristic, and a third step of calculating the combined refractive surface from the either combining formula (1) or combining formula (2) for combining the original progressive refractive surface and the original toric surface represented by the toroidal surface. 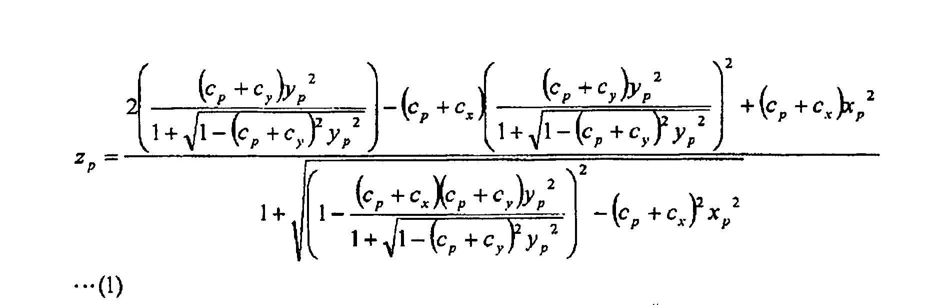 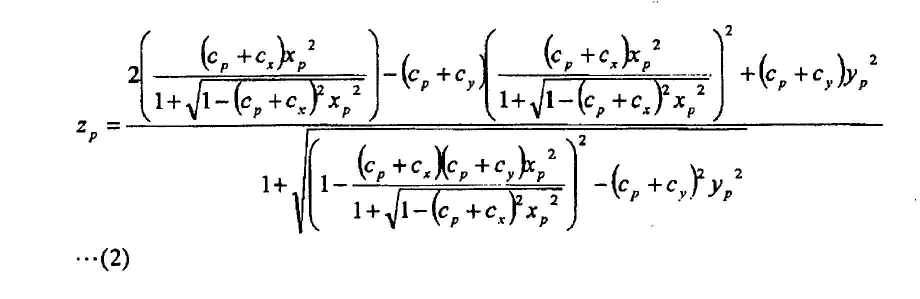 Preferred embodiments of the invention will be explained in more detail below with reference to the drawings, which:

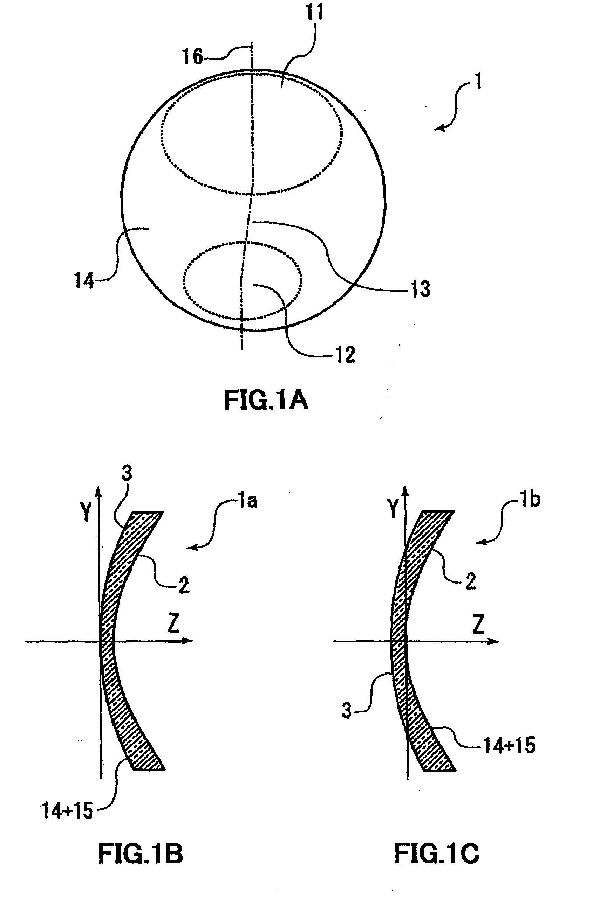

- Fig. 1: shows the schematic constructions of a progressive multifocal lenses according to the present invention, wherein (a) shows a front view, (b) a sectional view of an example in which a combined refractive surface is provided on the object side, and (c) a sectional view of an example in which a combined refractive surface is provided on the eyeball side.

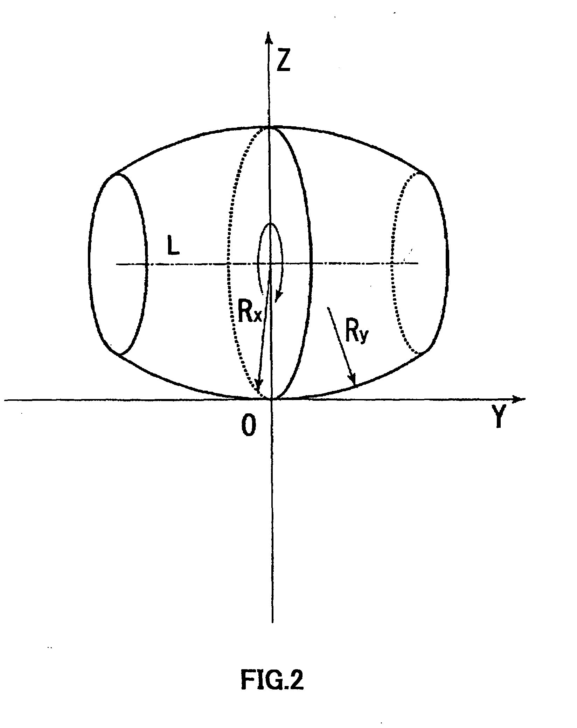

- Fig. 2: is a conceptual diagram for explaining toroidal surfaces.

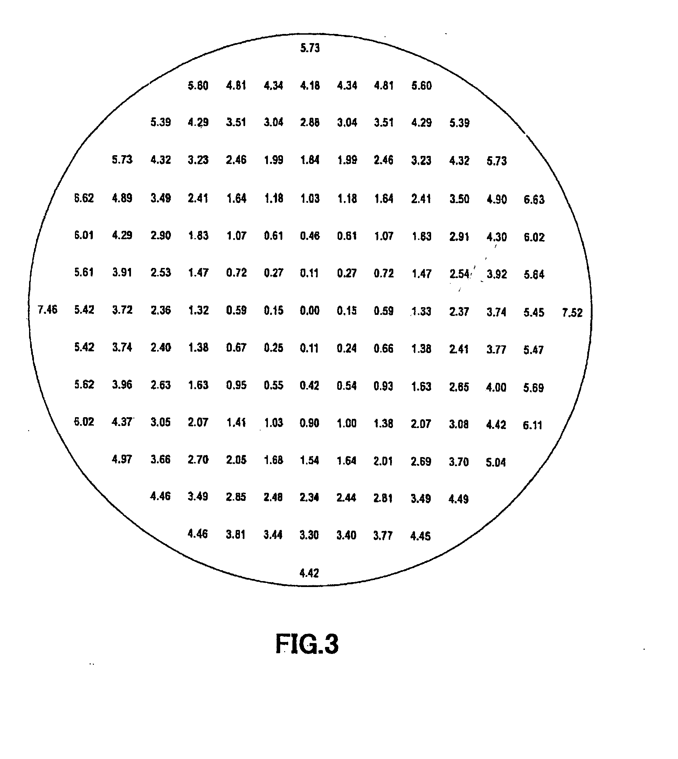

- Fig. 3: is a coordinate profile diagram showing the z-coordinate values of the eyeball side of a progressive multifocal lens in Example 1.

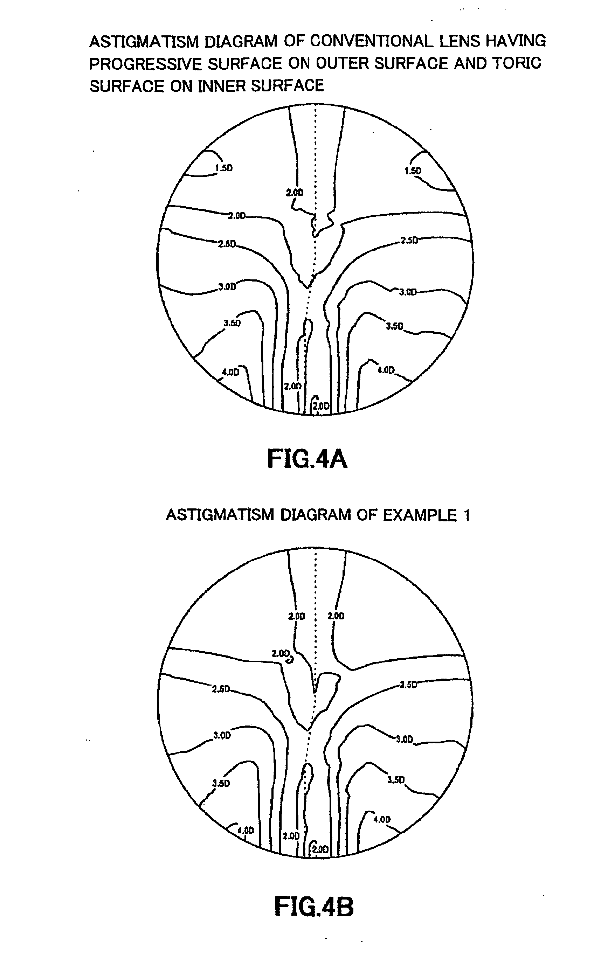

- Fig. 4(a): is an astigmatism diagram of a multifocal lens in which a progressive surface and a toric surface are respectively located on the object side and the eyeball side, and (b) is an astigmatism diagram of the progressive multifocal lens in Example 1 in which a progressive surface and a toric surface are combined on the eyeball side.

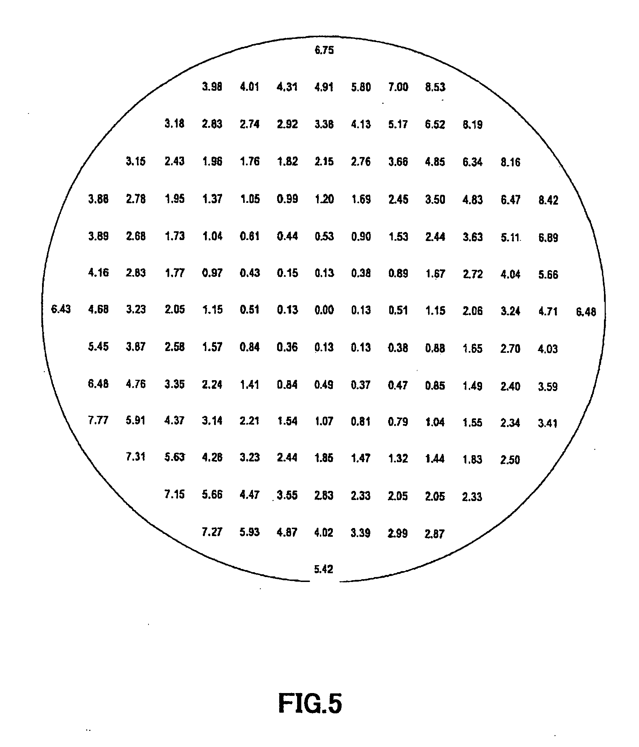

- Fig. 5: is a coordinate profile diagram showing the z-coordinate values of the eyeball side of a progressive multifocal lens in Example 2.

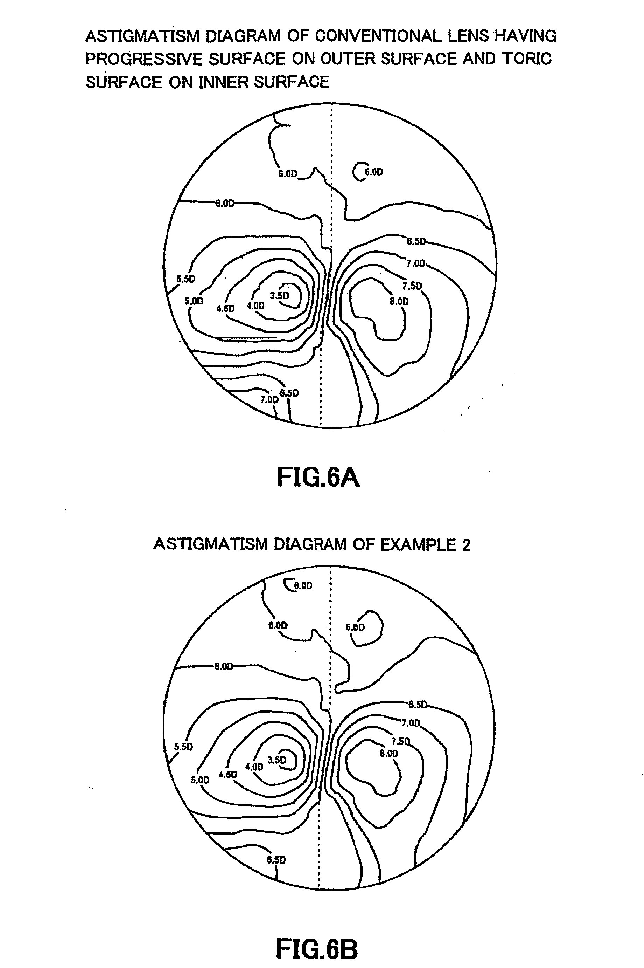

- Fig. 6(a): is an astigmatism diagram of a multifocal lens in which a progressive surface and a toric surface are respectively located on the object side and the eyeball side, and (b) is an astigmatism diagram of the progressive multifocal lens in Example 2 in which a progressive surface and a toric surface are combined on the eyeball side.
- Fig. 7: shows the schematic constructions of conventional progressive multifocal lenses, wherein (a) shows a front view, (b) a sectional view of an example in which a progressive refractive surface is provided on the object side, and (c) a sectional view of an example in which a progressive refractive surface is provided on the eyeball side.

The progressive multifocal lens of the present invention has a progressive refractive surface that includes a far-use portion and a near-use portion which have different refractive powers, and a progressive portion whose refractive power changes progressively between the far-use and near-use portions. The progressive refractive surface is provided either on the side of the eyeball or on the side of the object.

As shown in Fig. 1, in the progressive multifocal lens 1 of the present invention a far-use portion 11 is located above, and a visual field portion which has a refractive power different from that of the far-use portion 11 is located as a near-use portion 12 under the far-use portion 11. The far-use portion 11 and the near-use portion 12 are smoothly connected by a progressive portion 13 which has a refractive power that changes continuously.

The progressive multifocal lens of the present invention may be fabricated as an outer-surface progressive multifocal lens 1a in which a progressive refractive surface 14 including the far-use portion 11, near-use portion 12 and progressive portion 13 is located on the object-side refractive surface 3 (also termed "convex surface" or "outer surface") as shown in Fig. 1(b). Alternatively, it may be fabricated as an inner-surface progressive multifocal lens 1b in which the progressive refractive surface 14 is located on the eyeball-side refractive surface 2 (also termed "concave surface" or "inner surface") as shown in Fig. 1 (c).

As compared with the outer-surface progressive multifocal lens 1 a, the inner-surface progressive multifocal lens 1 b can reduce the difference between magnifying powers in the far-use portion 11 and the near-use portion 12 and can sharply relieve the shaking and distortion of an image attributed to that difference. When the curvature of the progressive refractive surface is afforded to the eyeball-side refractive surface 2, the curvature of the progressive refractive surface along a principal fixation line 16 becomes smaller in the near-use portion 12 than in the far-use portion 11. Besides, in the far-use portion 11, the curvature of the progressive refractive surface becomes smaller with the distance from the principal fixation line 16 in, at least, a partial region, while in the near-use portion 11, the curvature of the progressive refractive surface becomes larger with the distance from the principal fixation line 16 in, at least, a partial region.

Further, it is desirable in constructing the progressive refractive surface 14 that astigmatism is minimized on the principal fixation line 16. For this purpose, the curvatures in two orthogonal directions of the progressive refractive surface on the principal fixation line 16 should desirably be equal, at least, in a partial region of the principal fixation line 16.

In the progressive multifocal lens 1 of the present invention, either the object-side refractive surface 3 or the eyeball-side refractive surface 2 is constructed of a combined refractive surface 14 + 15 which has both an eyesight correcting capability and an astigmia remedying capability. In case of the outer-surface progressive multifocal lens 1a shown in Fig. 1(b), the combined refractive surface 14 + 15 is located on the object-side refractive surface 3, and the eyeball-side refractive surface 2 on the opposite side is a spherical surface or rotationally-symmetric non-spherical surface. In case of the inner-surface progressive multifocal lens 1 b shown in Fig. 1(c), the combined refractive surface 14 + 15 is located on the eyeball-side refractive surface 2, and the object-side refractive surface 3 on the opposite side is a spherical surface or rotationally-symmetric nonspherical surface. When the combined refractive surface 14 + 15 is located on the eyeball-side refractive surface 2, astigmia can be remedied, and the difference between the magnifying powers of the far-use portion 11 and the near-use portion 12 can be reduced to the required minimum, as stated above. Since there is only little distortion and shaking of the image, more pleasant visual fields can be offered even to an astigmic user.

The design of such a progressive multifocal lens in which either refractive surface has both the eyesight correcting capability and the astigmia remedying capability can be performed by a first step of calculating a progressive refractive surface (hereinafter, "original progressive refractive surface") for the only purpose of causing it to demonstrate a desired eyesight-correcting characteristic, a second step of calculating a toric surface (hereinafter, "original toric surface") for the only purpose of causing the eyeball-side refractive surface 2 or the object-side refractive surface 3 to demonstrate a desired astigmia-remedying characteristic, and a third step of calculating the combined refractive surface from the original progressive refractive surface and the original toric surface by using a combining formula.

At the first step, the original progressive refractive surface is calculated on the basis of parameters conforming to the degree of presbyopia of a user and circumstances such as the way of use of spectacles, and the result is stored as coordinates, radii of curvature, or the like.

At the second step, a curved surface represented by a toroidal surface is employed as the original toric surface 15. The "toroidal surface" signifies the refractive surface of the locus of a circular arc in the case where the circular arc having a comparatively large radius of curvature is rotated about a center axis being a straight line which exists on the side of the center of the circular arc at a predetermined distance and which is parallel to a tangential line to the circular arc.

At the third step, the combined refractive surface in which the original progressive refractive surface and the original toric surface are combined is calculated by the combining formula (1) or the combining formula (2) already mentioned above.

Here, as shown in Figs. 1(b) and (c), letting a z-axis be an axis which passes through the center of the progressive refractive surface from the object side to the eyeball side in a spectacle-mounted state, an x-axis be in the direction of the cylinder axis of the original toric surface, and a y-axis be an axis which is orthogonal to the z-axis and the x-axis (in Figs. 1(b) and (c), the z-axis and the y-axis are shown), xₚ and yₚ indicate the respective x and y coordinates of any point P on the refractive surface of the object side or eyeball side, and zₚ indicates the z coordinate thereof in the direction z-axis. The point at which the object-side refractive surface 3 and the z-axis intersect is set as the origin for this object-side refractive surface 3, while the point at which the eyeball-side refractive surface 2 and the z-axis intersect is set as the origin for this eyeball-side refractive surface 2.

A curvature Cₚ is an approximate curvature at any point P(xₚ, yₚ, zₚ) on the original progressive refractive surface, a curvature Cₓ is the curvature in the direction of the cylinder axis of the astigmia-remedying toric surface, and a curvature C_{y} is the curvature in the direction orthogonal to the cylinder axis. An average curvature in a radial direction, for example, can be adopted as the approximate curvature Cp, and it is allowed to use the inverse of the radius of a circle which passes through the three points, namely the point P, a point P'(-xₚ, -yₚ, -zₚ) in rotational symmetry to the point P, and the inner-side vertex (0, 0, 0) or an outer-side vertex (0, 0, 0) within an xy-plane including any point P(xₚ, yₚ, zₚ) on the original progressive refractive surface and being perpendicular to the z-axis (passing through the lens center or an inner-side vertex (0, 0, 0)).

The calculating procedures of the combining formula (1) and (2) will be described with reference to Fig. 2. First, in an xyz-space, a circular arc of curvature c_{y} (radius of curvature 1/c_{y}) lying in contact with the y-axis at the origin as shown in Fig. 2 is considered on a yz-plane. In Fig. 2, the x-axis is in the direction perpendicular to the sheet of the drawing. The equation of the circular arc is expressed by:$\text{[Equation 3]} {\text{z}}_{\text{y}} \text{=} \frac{{\text{c}}_{\text{y}} {\text{y}}^{\text{2}}}{\text{1+} \sqrt{\text{1-} {\text{c}}_{\text{y}} {}^{\text{2}} {\text{y}}^{\text{2}}}}$

As shown in Fig. 2, consider a toroidal surface which is formed by rotating the circular arc about an axis that is a straight line L passing through a point (0, 0, Rₓ) and being parallel to the y-axis. The z-coordinate of the toroidal surface is the same as that of a circular arc rotated about a point (0, Rₓ) on an xz-plane, as shown in Fig. 2.

The equation of the circular arc obtained by rotating zy about the point (0, Rₓ) on the xz-plane is$\text{[Equation 4]} \text{(} {\text{z - R}}_{\text{x}} {\text{)}}^{\text{2}} \text{+} {\text{x}}^{\text{2}} \text{= (} {\text{R}}_{\text{x}} \text{-} {\text{z}}_{\text{y}} {\text{)}}^{\text{2}}$

Solving Equation (4) with respect to z results in,$\text{(} {\text{z - R}}_{\text{x}} {\text{)}}^{\text{2}} \text{= (} {\text{R}}_{\text{x}} \text{-} {\text{z}}_{\text{y}} {\text{)}}^{\text{2}} \text{-} {\text{x}}^{\text{2}}$$\text{z} \text{-} {\text{R}}_{\text{x}} \text{=-} \sqrt{\text{(} {\text{R}}_{\text{x}} \text{-} {\text{z}}_{\text{y}} {\text{)}}^{\text{2}} \text{-} {\text{x}}^{\text{2}}}$$\text{z} \text{=} {\text{R}}_{\text{x}} \text{-} \sqrt{\text{(} {\text{R}}_{\text{x}} \text{-} {\text{z}}_{\text{y}} {\text{)}}^{\text{2}} \text{-} {\text{x}}^{\text{2}}}$

Here, putting Cₓ = 1/Rₓ yields,$\text{z} \text{=} \frac{\text{1}}{{\text{c}}_{\text{x}}} \text{-} \sqrt{{\left(\frac{\text{1}}{\text{c} {\text{}}_{\text{x}}} \text{-} \text{z} {\text{}}_{\text{y}}\right)}^{\text{2}} \text{-} {\text{x}}^{\text{2}}} \text{=} \frac{\text{1}}{{\text{c}}_{\text{x}}} \text{-} \sqrt{{\left(\frac{\text{1-} \text{c} {\text{}}_{\text{x}} \text{z} {\text{}}_{\text{y}}}{\text{c} {\text{}}_{\text{x}}}\right)}^{\text{2}} \text{-} {\text{x}}^{\text{2}}} \text{=} \frac{\text{1}}{{\text{c}}_{\text{x}}} \text{-} \sqrt{\frac{\text{(1-} {\text{c}}_{\text{x}} {\text{z}}_{\text{y}} {\text{)}}^{\text{2}}}{{\text{c}}_{\text{x}} {}^{\text{2}}} \text{-} {\text{x}}^{\text{2}}} \text{=} \frac{\text{1}}{{\text{c}}_{\text{x}}} \text{-} \sqrt{\frac{\text{(1-} {\text{c}}_{\text{x}} {\text{z}}_{\text{y}} {\text{)}}^{\text{2}} \text{-} {\text{c}}_{\text{x}} {}^{\text{2}} {\text{x}}^{\text{2}}}{{\text{c}}_{\text{x}} {}^{\text{2}}}} \text{=} \frac{\text{1}}{{\text{c}}_{\text{x}}} \text{-} \frac{\sqrt{\text{(1-} {\text{c}}_{\text{x}} {\text{z}}_{\text{y}} {\text{)}}^{\text{2}} \text{-} {\text{c}}_{\text{x}} {}^{\text{2}} {\text{x}}^{\text{2}}}}{{\text{c}}_{\text{x}}} \text{=} \frac{\text{1-} \sqrt{\text{(1-} {\text{c}}_{\text{x}} {\text{z}}_{\text{y}} {\text{)}}^{\text{2}} \text{-} {\text{c}}_{\text{x}} {}^{\text{2}} {\text{x}}^{\text{2}}}}{{\text{c}}_{\text{x}}}$

Here, when the numerator and denominator of the Equation above are both multiplied by:$\text{1 +} \sqrt{\text{(1-} {\text{c}}_{\text{x}} {\text{z}}_{\text{y}} {\text{)}}^{\text{2}} \text{-} {\text{c}}_{\text{x}} {}^{\text{2}} {\text{x}}^{\text{2}}}$ we obtain: 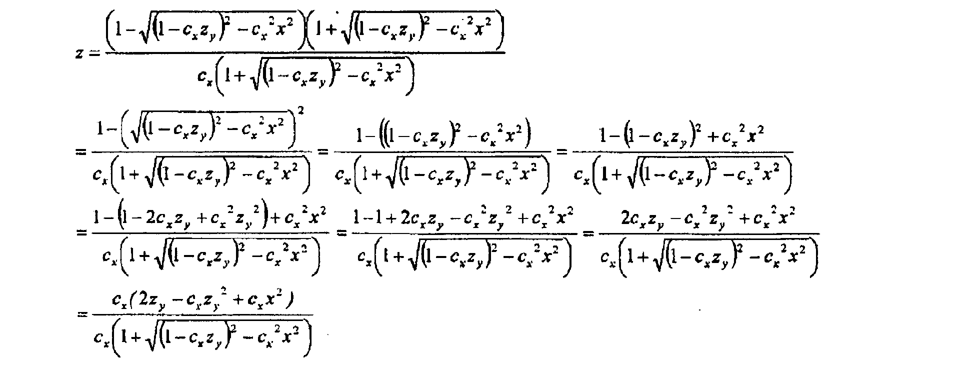 and, thus$\text{[Equation 5]} \text{z} \text{=} \frac{\text{2} {\text{z}}_{\text{y}} \text{-} {\text{c}}_{\text{x}} {\text{z}}_{\text{y}} {}^{\text{2}} \text{+} {\text{c}}_{\text{x}} {\text{x}}^{\text{2}}}{\text{1+} \sqrt{\text{(1-} {\text{c}}_{\text{x}} {\text{z}}_{\text{y}} {\text{)}}^{\text{2}} \text{-} {\text{c}}_{\text{x}} {}^{\text{2}} {\text{x}}^{\text{2}}}}$ is obtained.

When Equation (3) is substituted into Equation (5), the following equation 6 results 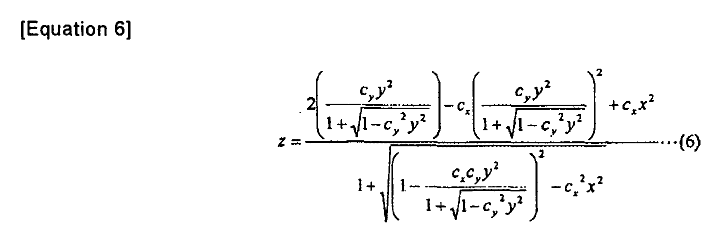 is obtained. This equation (6) is an equation, which represents the original toric surface. When Cp is combined with Cₓ and C_{y} in the equation (6), respectively, the following equation (7) is obtained:

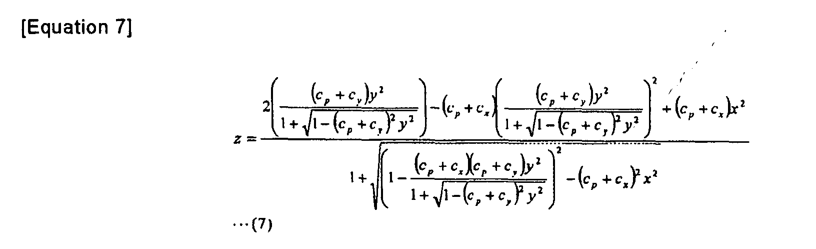

Letting (xₚ, y_{P}, zₚ) denote the coordinates of any point P on the combined refractive surface to-be-calculated, the combining formula (1) mentioned above is obtained.

Likewise, the equation of a toroidal surface which is formed in the xyz-space in such a way that a circular arc lying in contact with the x-axis at the origin on the xz-plane is rotated about an axis being a straight line which passes through the point (0, 0, R_{y}) and which is parallel to the x-axis, becomes

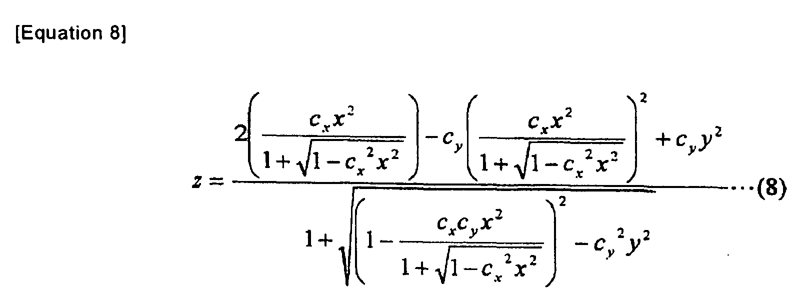

When Cₚ is combined with Cₓ and C_{y} in this equation (8) representing the original toric surface, respectively, the following equation (9) is obtained:

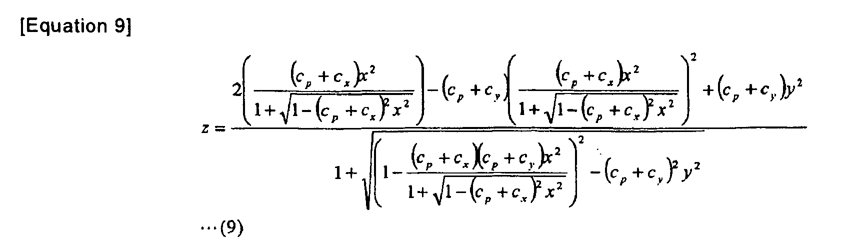

Letting (xₚ, yₚ, zₚ) denote the coordinates of any point P on the combined refractive surface to-be-calculated, the combining formula (2) mentioned above is obtained.

By the way, in a case where the coordinate systems of the original progressive refractive surface and the original toric surface rotate by the angle "ax" of the cylinder axis, the approximate curvature Cp at the following (pₓ, p_{y}, p_{z}) may be employed in the coordinate system of the original progressive refractive surface.$\text{[Equation 10]} \text{px} \text{= cos(} \text{ax} \text{)} {\text{x}}_{\text{p}} \text{-} \text{sin(} \text{ax} \text{)} {\text{y}}_{\text{p}}$$\text{py} \text{= sin(} \text{ax} \text{)} {\text{x}}_{\text{p}} \text{+ cos(} \text{ax} \text{)} {\text{y}}_{\text{p}}$${\text{pz=z}}_{\text{p}}$

The combining formula (1) or combining formula (2) is more complicated and requires a higher amount of computations as compared with the combining formula proposed in the document WO 97/19382, but the toric surface expressed by the toroidal surface is a planar shape of superior astigmia-remedying capability. Therefore, the combined refractive surface obtained by combining the toric surface and the progressive refractive surface as expressed by the combining formula (1) or (2) is superior in the astigmia-remedying capability. Besides, the inner-surface progressive multifocal lens 1b in which the refractive surface 2 on the eyeball side is constructed as the combined refractive surface 14 + 15 obtained by combining the toric surface and the progressive refractive surface as expressed by the combining formula (1) or (2) can reduce the difference between the magnifying powers in the far-use portion and the near-use portion, and can sharply relieve the shaking and distortion of an image attributed to the difference.

Incidentally, when a progressive refractive surface having an astigmia remedying characteristic is constructed in such a way that the value of the z-coordinate to construct the original progressive refractive surface having the eyesight correcting characteristic is added to the value of the z-coordinate for constructing the original toric surface having the astigmia remedying characteristic, it is difficult to attain an eyesight correcting capability and an astigmia remedying capability which are quite equivalent to those of the astigmia-remedying progressive multifocal lens in the conventional art.

Also, the progressive multifocal lens whose progressive refractive surface is located on the object-side refractive surface or the eyeball-side refractive surface can be thinned by adding a prism whose base is in the direction of 270 degrees.

After the coordinate values of that combined refractive surface of the progressive multifocal lens in which the progressive refractive surface and the toric surface are integrated have been calculated in this manner, the combined refractive surface is created on the surface of a molded lens, which is opposite to either the object-side refractive surface or the eyeball-side refractive surface formed into a spherical surface or a rotationally-symmetric non-spherical surface, by cutting, grinding, mirror-finished polishing, etc. by employing a numerical-control grinder on the basis of the coordinate values, whereby the progressive multifocal lens of the present invention can be fabricated.

### Examples

### Example 1

The progressive multifocal lens of this example has its object side formed into a spherical surface, the base curve of which is constant at 4.00D. An original progressive refractive surface before forming a toric surface is located on an eyeball side, and the average surfacial refractive power of the far-use portion is set at 4.00D, the average surfacial refractive power of the near-use portion at 2.00D, and the additional power is 2.00D. The cylinder axis of an original toric surface is 90 degree, the spherical refractive power S is -2.00D and the cylindrical refractive power C is -2.00D. The combined refractive surface has been calculated from the original progressive refractive surface and the original toric surface by using the combining formula (1) or (2). The thickness t of the lens at the center thereof is 3.0mm, and the diameter d of the lens is 70.0mm.

Shown in Fig. 3 are the z-coordinate values of the eyeball side of the progressive multifocal lens of Example 1. Shown in Fig. 4(b) is the astigmatic profile of the progressive multifocal lens according to Example 1 .Shown in Fig. 4(a) is the astigmatic profile of a conventional outer-surface progressive multifocal lens in which a progressive surface is located on the outer surface side (object side), while a toric surface is located on the inner surface side (eyeball side), the characteristics of the progressive surface and that of the toric surface being the same as those of the respective original surfaces in Example 1.

It is noticed from Fig. 4 that the progressive multifocal lens of Example 1 with the combined progressive refractive surface and the toric surface on the inner surface side is equivalent in performance to the outer-surface progressive multifocal lens in which the progressive surface is located on the object side, while the toric surface is located on the eyeball side.

### Example 2

The progressive multifocal lens of this example has its object side formed into a spherical surface, the base curve of which is constant at 4.00D. An original progressive refractive surface before forming a toric surface is located on the eyeball side, and the average surfacial refractive power of the far-use portion is set at 4.00D, the average surfacial refractive power of the near-use portion is 2.00D, and the additional power is 2.00D. The cylinder axis of the original toric surface is 45 degree, the spherical refractive power S is 0.00D and the cylindrical refractive power C is -6.00D. A combined refractive surface has been calculated from the original progressive refractive surface and the original toric surface by using the combining formula (1) or (2). The thickness t of the lens at the center thereof is 3.0mm, and the diameter d of the lens is 70.0mm.

Shown in Fig. 5 are the z-coordinate values of the eyeball side of the progressive multifocal lens of Example 2. Shown in Fig. 6(b) is the astigmatic profile of the progressive multifocal lens according to Example 2. Shown in Fig. 6(a) is the astigmatic profile of a conventional outer-surface progressive multifocal lens in which a progressive surface is located on the object side, while a toric surface is located on the eyeball side, the characteristics of the progressive surface and that of the toric surface being the same as those of the respective original surfaces in Example 2.

It is noticed from Fig. 6 that the progressive multifocal lens of Example 2 is equivalent in performance to the outer-surface progressive multifocal lens in which the progressive surface is located on the object side, while the toric surface is located on the eyeball side.

The progressive multifocal lens of the present invention allows combining a progressive refractive surface and a toric surface expressed by a toroidal surface in one refractive surface, which may either be the object-side surface or the eyeball-side surface, but preferably is the eyeball-side surface. Hence, a refractive surface on either of the object side or the eyeball side can be endowed with an eyesight correcting capability and an astigmia remedying capability.

## Claims

1. A progressive multifocal lens, having a combined refractive surface combining an original progressive refractive surface for correcting eyesight with a far-use portion and a near-use portion which have different refractive powers, and a progressive portion whose refractive power changes progressively between the far-use and near-use portions, and an original toric surface having a predetermined astigmia-remedying characteristic, the combined refractive surface being provided either on the eyeball side or the object side of the lens;
**characterized in that:**
letting a z-axis be an axis which passes through the center of the original progressive refractive surface from said object side onto said eyeball side, an x-axis be in a direction of an cylinder axis of the original toric surface, and a y-axis be an axis which is orthogonal to the z-axis and the x-axis, a value zₚ at any point P(xₚ, yₚ, zₚ) of the combined refractive surface is expressed by the following formula (1) or formula (2) using an approximate curvature Cₚ of the original progressive refractive surface, a curvature Cₓ in the direction of the cylinder axis of said original toric surface, and a curvature C_{y} in a direction orthogonal to said cylinder axis:

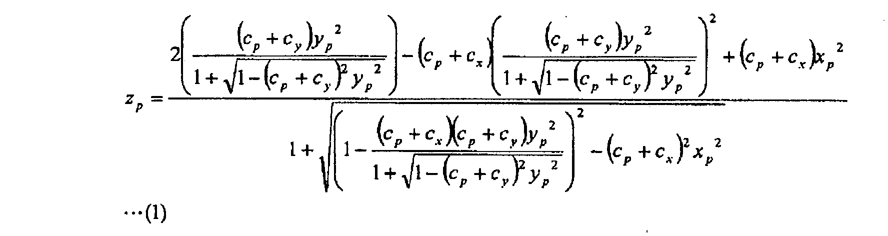

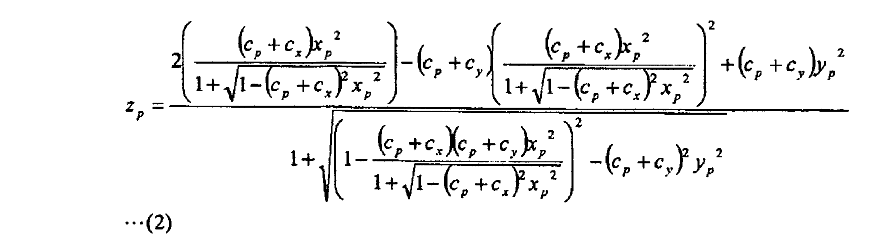

2. The lens as defined in claim 1, **characterized in that** the refractive surface opposite to said combined refractive surface is a spherical surface or a rotationally-symmetric non-spherical surface.

3. A method of designing a progressive multifocal lens having a combined refractive surface composed of a progressive refractive surface for correcting an eyesight having a far-use portion and a near-use portion which have different refractive powers, and a progressive portion whose refractive power changes progressively between the far-use and near-use portions, and an original toric surface having a predetermined astigmia-remedying characteristic, the combined refractive surface being provided either on the eyeball side or on the object side of the lens; the method comprising:
a first step of calculating an original progressive refractive surface for the only purpose of having an eyesight correcting characteristic;
a second step of calculating an original toric surface for the only purpose of having a desired astigmia-remedying characteristic; and
a third step of calculating said combined refractive surface in which the original progressive refractive, and the original toric surface are combined;
**characterized in that** said third step comprises:
letting a z-axis be an axis which passes through a center of the original progressive refractive surface from said object side to said eyeball side, an x-axis be in a direction of a cylinder axis of said original toric surface, and a y-axis be an axis which is orthogonal to the z-axis and the x-axis, calculating a value zₚ at any point P(xₚ, yₚ, zₚ) of the combined refractive surface in accordance with the following formula (1) or formula (2) by using an approximate curvature Cₚ of said original progressive refractive surface, a curvature Cₓ in a direction of said x-axis, and a curvature C_{y} in a direction of the y-axis:
